# EUROPEAN PATENT APPLICATION

(11) **EP 4 703 402 A1**
(43) Date of publication of application: **04.03.2026**
(21) Application number: 24796755.7
(22) Date of filing: 05.04.2024
(51) Int. Cl.: C08G 61/06, C08K 3/013, C08K 5/16, C08K 5/49, C08K 5/56, C08L 65/00

(54) **POLYMERIZABLE COMPOSITION AND MOLDED ARTICLE**

(30) Priority: 26.04.2023 JP 2023072165
(71) Applicant: RIMTEC Corporation, Tokyo 100-0005 (JP)
(72) Inventor: FUKUMOTO, Naoki, Tokyo 100-0005 (JP)
(74) Representative: Kraus & Lederer PartGmbB
(86) International application number: PCT/JP2024/014110
(87) International publication number: WO 2024/224997

(57) **Abstract**

Provided is a polymerizable composition that can give a molded body having excellent flame resistant properties. Provided is a polymerizable composition comprising a cycloolefin monomer, a metathesis polymerization catalyst, at least one flame retardant selected from phosphorus-based flame retardant, phosphorus and nitrogen-based flame retardant, and nitrogen-based flame retardant, and an inorganic filler.

## Description

### TECHNICAL FIELD

The present invention relates to a polymerizable composition and a molded body.

### BACKGROUND ART

Recently, cycloolefin-based resins are broadly used in fields of optical parts, electronic devices, medical apparatuses, automobile parts, and the like because they have features such as high heat resistance, low water-absorbing properties, and low dielectric constant.

For example, Patent Document 1 discloses a polymerizable composition comprising: at least one of a cycloolefin-based monomer (a) represented by a specific General Formula (I) and a cycloolefin-based monomer (β) represented by a specific General Formula (II), a silane coupling agent having at least one hydrocarbon group having a norbornene structure, and a metathesis polymerization catalyst.

### RELATED ART DOCUMENT

### PATENT DOCUMENT

Patent Document 1: WO 2021/024956

### SUMMARY OF THE INVENTION

### PROBLEMS TO BE SOLVED BY THE INVENTION

An object of the present invention is to provide a polymerizable composition that can give a molded body having excellent flame resistant properties.

### MEANS FOR SOLVING PROBLEMS

The present inventor, who has conducted research to achieve the above object, has found that the above problem can be solved by allowing a specific flame retardant and an inorganic filler to be contained in combination in a polymerizable composition comprising a cycloolefin monomer as a main component. This finding has led to completion of the present invention.

Specifically, the present invention provides a polymerizable composition and a molded body as described below.
[1] A polymerizable composition comprising a cycloolefin monomer, a metathesis polymerization catalyst, at least one flame retardant selected from the group consisting of phosphorus-based flame retardants, phosphorus and nitrogen-based flame retardants, and nitrogen-based flame retardants, and an inorganic filler.
[2] The polymerizable composition according to [1], wherein the inorganic filler is scale-like particles or spherical particles.
[3] The polymerizable composition according to [1] or [2], wherein the component of the inorganic filler is at least one selected from the group consisting of inorganic oxides, metal hydrates, metal nitrides, and glass.
[4] The polymerizable composition according to any one of [1] to [3], comprising a cycloolefin monomer having no polar group as the cycloolefin monomer.
[5] The polymerizable composition according to any one of [1] to [4], comprising dicyclopentadienes as the cycloolefin monomer.
[6] The polymerizable composition according to any one of [1] to [5], further comprising at least one selected from coupling agents, radical generators, diisocyanate compounds, and polyfunctional (meth)acrylate compounds.
[7] The polymerizable composition according to any one of [1] to [6], comprising a phosphorus-based flame retardant and a nitrogen-based flame retardant as the flame retardants.
[8] The polymerizable composition according to any one of [1] to [7], wherein the content of the flame retardant is 8 to 35% by mass.
[9] The polymerizable composition according to any one of [1] to [8], wherein the content of the inorganic filler is 15 to 85% by mass.
[10] The polymerizable composition according to any one of [1] to [9], further comprising an (meth)acrylate monomer.
[11] A molded body formed by curing the polymerizable composition according to any one of [1] to [10].

### EFFECTS OF INVENTION

The present invention provides a polymerizable composition that can give a molded body having excellent flame resistant properties.

### DESCRIPTION OF EMBODIMENTS

### <Polymerizable composition>

The polymerizable composition according to the present invention comprises a cycloolefin monomer, a metathesis polymerization catalyst, at least one flame retardant selected from phosphorus-based flame retardants, phosphorus and nitrogen-based flame retardants, and nitrogen-based flame retardants, and an inorganic filler.

The polymerizable composition according to the present invention comprises the above-described components in combination, and thus can give a molded body having excellent flame resistant properties. These excellent flame resistant properties are an effect which can be achieved only when the above-described specific flame retardant and an inorganic filler are contained in combination in a polymerizable composition containing a cycloolefin monomer as the main component, but cannot be achieved when one or both of them are not contained.

### [Cycloolefin monomer]

The cycloolefin monomer is a compound having an alicyclic structure and a carbon-carbon double bond in the molecule. Examples of the alicyclic structure contained in the cycloolefin monomer include monocyclic, polycyclic, fused polycyclic, and bridged cyclic structures, and polycyclic structures as combinations thereof. The number of carbon atoms contained in the alicyclic structure is not particularly limited, but the alicyclic structure usually contains 4 to 30 carbon atoms, preferably 5 to 20 carbon atoms, more preferably 5 to 15 carbon atoms.

Examples of the cycloolefin monomer include monocyclic cycloolefin monomers, norbornene-based monomers, and the like, and preferred are norbornene-based monomers. The norbornene-based monomer is a cycloolefin monomer having a norbornene ring structure in the molecule. These monomers may be substituted by a hydrocarbon group such as an alkyl group, an alkenyl group, an alkylidene group, or an aryl group, a polar group, or the like. In addition, the norbornene-based monomer may have a double bond other than the double bond of the norbornene ring.

Examples of the monocyclic cycloolefin monomer include cyclobutene, cyclopentene, cyclooctene, cyclododecene, cyclopentadiene, 1,5-cyclooctadiene, and the like

Specific examples of the norbornene-based monomer include dicyclopentadienes such as dicyclopentadiene, methyldicyclopentadiene, and dicyclopentadiene monoepoxide;
tetracyclododecenes such as tetracyclo[6.2.1.1^{3,6}.0^{2,7}]dodec-4-ene, 9-ethylidenetetracyclo[6.2.1.1^{3,6}.0^{2,7}]dodec-4-ene, 9-phenyltetracyclo[6.2.1.1^{3,6}.0^{2,7}]dodec-4-ene, tetracyclo [6.2.1.1^{3,6}.0^{2,7}]dodec-9-ene-4-carboxylic acid, and tetracyclo[6.2.1.1^{3,6}.0^{2,7}]dodec-9-ene-4,5-dicarboxylic acid anhydride;
norbornenes such as 2-norbornene, 5-ethylidene-2-norbornene, 5-vinyl-2-norbornene, 5-phenyl-2-norbornene, 5-norbornene-2-yl acrylate, 5-norbornene-2-yl methacrylate, 5-norbornene-2-carboxylic acid, 5-norbornene-2,3-dicarboxylic acid, and 5-norbornene-2,3-dicarboxylic acid anhydride;
oxanorbornenes such as 7-oxa-2-norbornene and 5-ethylidene-7-oxa-2-norbornene;
cyclic olefins having four or more rings such as tetracyclo[9.2.1.0^{2,10}.0^{3,8}]tetradeca-3,5,7,12-tetraene (also referred to as 1,4-methano-1,4,4a,9a-tetrahydro-9H-fluorene), pentacyclo[6.5.1.1^{3,6}.0^{2,7}.0^{9,13}]pentadeca-4,10-diene, pentacyclo[9.2.1.0^{2,10}.0^{3,8}]pentadeca-5,12-diene, and tricyclopentadiene; and the like.

Among these cycloolefin monomers, a cycloolefin monomer having no polar group is preferably contained because a molded body having low water-absorbing properties can be obtained. On the other hand, when a cycloolefin monomer having an aromatic fused ring such as tetracyclo[9.2.1.0^{2,10}.0^{3,8}]tetradeca-3,5,7,12-tetraene is used, the viscosity of the polymerizable composition can be decreased.

These cycloolefin monomers can be used alone or in combination. The polymerizable composition used in the present invention preferably comprises dicyclopentadienes as the cycloolefin monomer. It is to be noted that the polymerizable composition according to the present invention may comprise any monomer copolymerizable with the cycloolefin monomer as long as the effect of the present invention is not impaired.

The content of the cycloolefin monomer in the polymerizable composition according to the present invention is not particularly limited, but is preferably 8 to 60% by mass, more preferably 10 to 50% by mass, still more preferably 15 to 30% by mass. When the content is within the above ranges, a molded body having high strength and more excellent flame resistant properties can be obtained.

### [(Meth)acrylate monomer]

The polymerizable composition according to the present invention may further comprise an (meth)acrylate monomer as the monomer component in addition to the cycloolefin monomer.

The (meth)acrylate monomer may be a polyfunctional monomer having three or more (meth)acryloyl groups, and is suitably a monofunctional monomer having one (meth)acryloyl group or a bifunctional monomer having two (meth)acryloyl groups, and more suitably a monofunctional monomer. The (meth)acrylate monomer is suitably a methacrylate monomer.

The (meth)acrylate monomer preferably has a hydrocarbon group having 6 carbon atoms or more because such an (meth)acrylate monomer is excellent for demonstration of the effect. The hydrocarbon group has preferably 6 to 100, more preferably 8 to 50, still more preferably 10 to 20 carbon atoms.

Specific examples of the monofunctional monomer having one (meth)acryloyl group include benzyl methacrylate, hexyl methacrylate, phenyl methacrylate, phenoxyethyl methacrylate, octenyl methacrylate, tolyl methacrylate, cyclohexyl methacrylate, adamantyl methacrylate, lauryl methacrylate, stearyl methacrylate, tetrahydrofurfuryl methacrylate, methoxy diethylene glycol methacrylate, phenoxyethylene glycol methacrylate, dicyclopentenyloxyethyl methacrylate, dicyclopentanyl methacrylate, and the like.

Specific examples of the bifunctional monomer having two (meth)acryloyl groups include ethylene dimethacrylate, 1,3-butylene dimethacrylate, 1,4-butylene dimethacrylate, 1,6-hexanediol dimethacrylate, polyethylene glycol dimethacrylate, polyethylene glycol dimethacrylate, ethylene glycol dimethacrylate, triethylene glycol dimethacrylate, diethylene glycol dimethacrylate, bisphenol dimethacrylate, tricyclodecane dimethanol dimethacrylate, 1,3-adamantyldimethanol dimethacrylate, 1,4-adamantyldimethanol dimethacrylate, 2,2'-bis(4-methacryloxydiethoxyphenyl)propane, and the like.

Specific examples of polyfunctional monomers having three or more (meth)acryloyl groups include trimethylolpropane trimethacrylate, pentaerythritol trimethacrylate, and the like.

These monofunctional monomers having one (meth)acryloyl group, bifunctional monomers having two (meth)acryloyl groups, and polyfunctional monomers having three or more (meth)acryloyl groups may be used in any combination in any proportion.

In the polymerizable composition according to the present invention, the content of the (meth)acrylate monomer is not particularly limited, but is preferably 0.1 to 10 parts by mass, more preferably 0.2 to 8 parts by mass, still more preferably 0.5 to 5 parts by mass relative to 100 parts by mass of the total amount of the cycloolefin monomer used in the composition. When the content is within the above ranges, a molded body having high strength and more excellent flame resistant properties can be obtained.

### [Metathesis polymerization catalyst]

The metathesis polymerization catalyst used in the present invention can be any metathesis polymerization catalyst as long as it can ring-opening polymerize the cycloolefin monomer, and known metathesis polymerization catalysts can be used.

The metathesis polymerization catalyst used in the present invention is a complex having a transition metal atom as a central atom to which a plurality of ions, atoms, polyatomic ions, and/or compounds are bonded. As the transition metal atom, atoms of Groups 5, 6, and 8 (Long Periodic Table, hereinafter, the same is applied) are used. Although there is no particular limitation to the atoms of the respective groups, examples of atoms of Group 5 include tantalum, examples of atoms of Group 6 include molybdenum and tungsten, and examples of atoms of Group 8 include ruthenium and osmium. Among these transition metal atoms, preferred are ruthenium and osmium of Group 8. That is, the metathesis polymerization catalyst used in the present invention is preferably a complex having ruthenium or osmium as the central atom, more preferably a complex having ruthenium as the central atom. The complex having ruthenium as the central atom is preferably a ruthenium carbene complex in which a carbene compound is coordinated with ruthenium. Here, the "carbene compound" is a generic name for a compound having a methylene free radical, and refers to a compound having an uncharged divalent carbon atom (carbene carbon) represented by (>C:). Because the ruthenium carbene complex has high catalytic activity during bulk ring-opening polymerization, a high-quality polymer having a low odor derived from unreacted monomers is prepared with high productivity. The ruthenium carbene complex, which is relatively stable to oxygen or moisture in the air and is hardly deactivated, can be used under the air. These metathesis polymerization catalysts may be used alone or in combination.

Examples of the ruthenium carbene complex include those represented by General Formula (1) or (2):

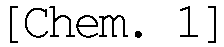

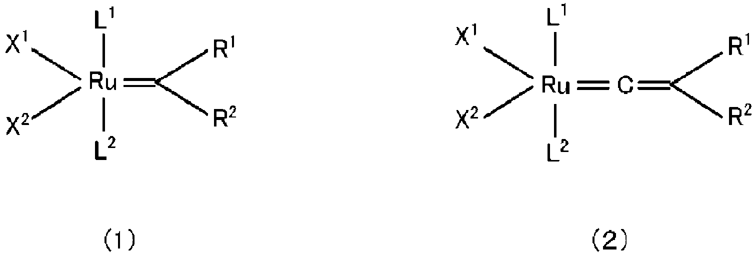

In General Formulae (1) and (2) above, R¹ and R² each independently represent a hydrogen atom, a halogen atom, or a C₁ to C₂₀ organic group which may contain a halogen atom, an oxygen atom, a nitrogen atom, a sulfur atom, a phosphorus atom, or a silicon atom; and these groups may be substituted, or may be bonded to each other to form a ring. Examples of R¹ and R² bonded to each other to form a ring include indenylidenes which may be substituted, such as a phenylindenylidene group.

Specific examples of C₁ to C₂₀ organic groups which may contain a halogen atom, an oxygen atom, a nitrogen atom, a sulfur atom, a phosphorus atom, or a silicon atom include C₁ to C₂₀ alkyl groups, C₂ to C₂₀ alkenyl groups, C₂ to C₂₀ alkynyl groups, C₆ to C₂₀ aryl groups, C₁ to C₂₀ alkoxy groups, C₂ to C₂₀ alkenyloxy groups, C₂ to C₂₀ alkynyloxy groups, C₆ to C₂₀ aryloxy groups, C₁ to C₈ alkylthio groups, a carbonyloxy group, C₁ to C₂₀ alkoxycarbonyl groups, C₁ to C₂₀ alkylsulfonyl groups, C₁ to C₂₀ alkylsulfinyl groups, C₁ to C₂₀ alkylsulfonic acid groups, C₆ to C₂₀ arylsulfonic acid groups, a phosphonic acid group, C₆ to C₂₀ arylphosphonic acid groups, C₁ to C₂₀ alkylammonium groups, C₆ to C₂₀ arylammonium groups, and the like. These C₁ to C₂₀ organic groups which may contain a halogen atom, an oxygen atom, a nitrogen atom, a sulfur atom, a phosphorus atom, or a silicon atom may be substituted. Examples of substituents include C₁ to C₁₀ alkyl groups, C₁ to C₁₀ alkoxy groups, C₆ to C₁₀ aryl groups, and the like.

X¹ and X² each independently represent any anionic ligand. The anionic ligand is a ligand having a negative charge when separated from a central metal atom, and examples thereof include halogen atoms, diketonate groups, substituted cyclopentadienyl groups, alkoxyl groups, aryloxy groups, a carboxyl group, and the like.

L¹ and L² represent a heteroatom-containing carbene compound or a neutral electron-donating compound other than the heteroatom-containing carbene compound. The heteroatom-containing carbene compound and the neutral electron-donating compound other than the heteroatom-containing carbene compound are compounds having a neutral charge when separated from the central metal. To improve catalytic activity, preferred are heteroatom-containing carbene compounds. The heteroatom indicates atoms of Groups 15 and 16 in the Periodic Table, and specifically examples thereof include a nitrogen atom, an oxygen atom, a phosphorus atom, a sulfur atom, an arsenic atom, a selenium atom, and the like. Among these, preferred are a nitrogen atom, an oxygen atom, a phosphorus atom, and a sulfur atom, and more preferred is a nitrogen atom to obtain a stable carbene compound.

The heteroatom-containing carbene compound is preferably a compound represented by General Formula (3) or (4) below. To improve catalytic activity, more preferred is a compound represented by General Formula (3) below:

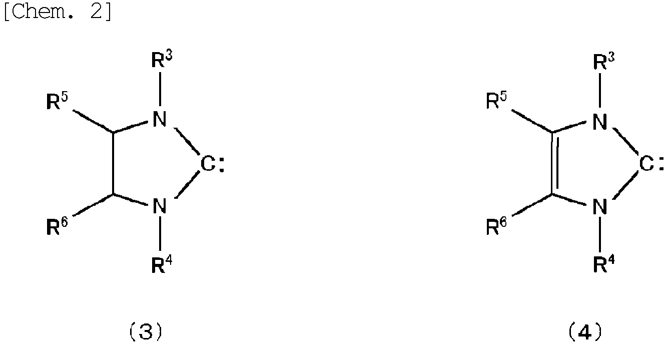

In General Formulae (3) and (4) above, R³, R⁴, R⁵, and R⁶ each independently represent a hydrogen atom, a halogen atom, or a C₁ to C₂₀ organic group which may contain a halogen atom, an oxygen atom, a nitrogen atom, a sulfur atom, a phosphorus atom, or a silicon atom. Specific examples of the C₁ to C₂₀ organic group which may contain a halogen atom, an oxygen atom, a nitrogen atom, a sulfur atom, a phosphorus atom, or a silicon atom are the same as those listed in General Formulae (1) and (2). R³, R⁴, R⁵, and R⁶ may also be bonded to each other in any combination to form a ring.

R⁵ and R⁶ are preferably a hydrogen atom because the effects of the present invention become more prominent. R³ and R⁴ are preferably an aryl group which may be substituted, more preferably a phenyl group having a C₁ to C₁₀ alkyl group as a substituent, still more preferably a mesityl group.

Examples of the neutral electron-donating compound include an oxygen atom, water, carbonyls, ethers, nitriles, esters, phosphines, phosphinites, phosphites, sulfoxides, thioethers, amides, imines, aromatics, cyclic diolefins, olefins, isocyanides, thiocyanates, and the like.

In General Formulae (1) and (2) above, R¹, R², X¹, X², L¹, and L² may stand alone, and/or may be bonded to each other in any combination to form a multidentate chelating ligand.

Among these compounds represented by General Formula (1) or (2) above, preferred are compounds represented by General Formula (1) above as the ruthenium carbene complex because the effects of the present invention become more prominent. Among these, more preferred are compounds represented by General Formula (5) or (6) below.

General Formula (5) is shown below:

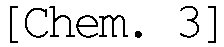

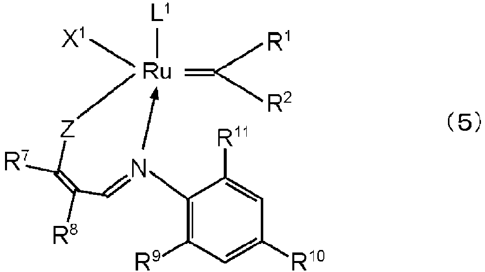

In General Formula (5), Z is an oxygen atom, a sulfur atom, a selenium atom, NR¹², PR¹², or AsR¹², and R¹² is a hydrogen atom, a halogen atom, or a C₁ to C₂₀ organic group which may contain a halogen atom, an oxygen atom, a nitrogen atom, a sulfur atom, a phosphorus atom, or a silicon atom. Z is preferably an oxygen atom because the effects of the present invention become more prominent.

R¹, R², X¹, and L¹ are the same as those in General Formulae (1) and (2) above, and may stand alone and/or may be bonded to each other in any combination to form a multidentate chelating ligand. It is preferred that X¹ and L¹ do not form a multidentate chelating ligand and R¹ and R² be bonded to each other to form a ring, which is more preferably an indenylidene group which may be substituted, still more preferably a phenylindenylidene group. Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above.

In General Formula (5) above, R⁷ and R⁸ are each independently a hydrogen atom, a C₁ to C₂₀ alkyl group, a C₂ to C₂₀ alkenyl group, or a C₆ to C₂₀ heteroaryl group. These groups may be substituted, or may be bonded to each other to form a ring. Examples of substituents include C₁ to C₁₀ alkyl groups, C₁ to C₁₀ alkoxy groups, and C₆ to C₁₀ aryl groups. Although the ring when it is formed by R⁷ and R⁸ may be any one of an aromatic ring, an alicyclic ring, and a heterocyclic ring, R⁷ and R⁸ preferably form an aromatic ring, more preferably form a C₆ to C₂₀ aromatic ring, still more preferably form a C₆ to C₁₀ aromatic ring.

In General Formula (5) above, R⁹, R¹⁰, and R¹¹ are each independently a hydrogen atom, a halogen atom, or a C₁ to C₂₀ organic group which may contain a halogen atom, an oxygen atom, a nitrogen atom, a sulfur atom, a phosphorus atom, or a silicon atom. These groups may be substituted, or may be bonded to each other to form a ring. Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above. R⁹, R¹⁰, and R¹¹ are preferably a hydrogen atom or a C₁ to C₂₀ alkyl group, more preferably a hydrogen atom or a C₁ to C₃ alkyl group.

Specific examples of the compound represented by General Formula (5) above and the method of producing the same include those described in WO 03/062253 (JP 2005-515260 T).

General Formula (6) is shown below:

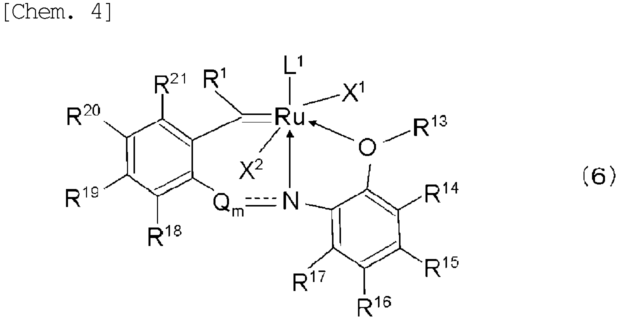

In General Formula (6) above, m is 0 or 1. m is preferably 1, and in this case, Q is an oxygen atom, a nitrogen atom, a sulfur atom, a methylene group, an ethylene group, or a carbonyl group, preferably a methylene group.

In General Formula (6) above, 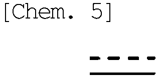 is a single bond or a double bond, preferably a single bond.

R¹, X¹, X², and L¹ are the same as those in General Formulae (1) and (2) above, and may stand alone and/or may be bonded to each other in any combination to form a multidentate chelating ligand. Preferably, X¹, X², and L¹ do not form a multidentate chelating ligand, and R¹ is a hydrogen atom.

R¹³ to R²¹ are a hydrogen atom, a halogen atom, or a C₁ to C₂₀ organic group which may contain a halogen atom, an oxygen atom, a nitrogen atom, a sulfur atom, a phosphorus atom, or a silicon atom. These groups may be substituted, or may be bonded to each other to form a ring. Specific examples of the C₁ to C₂₀ organic group which may contain a halogen atom, an oxygen atom, a nitrogen atom, a sulfur atom, a phosphorus atom, or a silicon atom are the same as those in General Formulae (1) and (2) above. R¹³ is preferably a C₁ to C₂₀ alkyl group, more preferably a C₁ to C₃ alkyl group. R¹⁴ to R¹⁷ are preferably a hydrogen atom, and R¹⁸ to R²¹ are preferably a hydrogen atom or a halogen atom.

Specific examples of the compound represented by General Formula (6) above and a method for producing the same include those described in WO 11/079799 (JP 2013-516392 T).

As the compound represented by General Formula (1) above, a compound (7) below can also be suitably used as well as the compounds represented by General Formula (5) or (6) above. In the compound (7), PCy₃ represents tricyclohexylphosphine, and Mes represents a mesityl group.

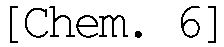

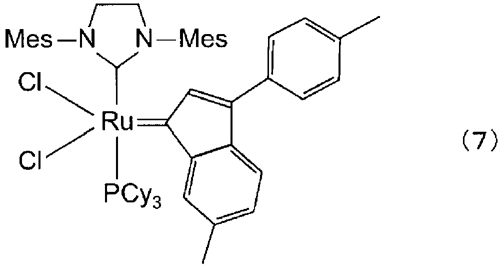

The content of the metathesis polymerization catalyst is preferably 0.005 mmol or more, more preferably 0.01 to 50 mmol, still more preferably 0.015 to 20 mmol relative to 1 mol of the total amount of the cycloolefin monomer used in the reaction.

### [Flame retardant]

The polymerizable composition according to the present invention comprises at least one flame retardant selected from phosphorus-based flame retardants, phosphorus and nitrogen-based flame retardants, and nitrogen-based flame retardants. The flame retardant may be any of solid, liquid, and combinations thereof.

The flame retardant used in the present invention is preferably a non-halogen-based flame retardant, which does not produce halogen-containing hazardous materials at the time of incineration. The polymerizable composition according to the present invention preferably does not comprise a halogen-based flame retardant, which produces halogen-containing hazardous materials at the time of incineration.

The phosphorus-based flame retardant is a flame retardant which has a phosphorus atom and does not have a nitrogen atom. Examples of the phosphorus-based flame retardant include organic phosphorus-based flame retardants and inorganic phosphorus-based flame retardants. Examples of the organic phosphorus-based flame retardants include phosphoric acid esters such as triphenyl phosphate; organic phosphonic acid compounds such as phosphonic acid esters, such as diphenyl methylphosphonate and diethyl phenylphosphonate; organic phosphinic acid compounds such as methyl phosphinate; phosphine oxides such as triphenylphosphine oxide and tricresylphosphine oxide; and the like. Examples of the inorganic phosphorus-based flame retardants include red phosphorus; orthophosphoric acid; phosphorous acid; hypophosphorous acid; polyphosphoric acids such as metaphosphoric acid, pyrophosphoric acid, triphosphoric acid, and tetraphosphoric acid; polyphosphorous acids such as metaphosphorous acid and pyrophosphorous acid; unfused phosphoric (phosphorous) acid salts; fused phosphoric (phosphorous) acid salts; and the like. Among these, preferred are phosphine oxides because the effects of the present invention become more prominent.

The nitrogen/phosphorus-based flame retardant is a flame retardant having a phosphorus atom and a nitrogen atom. Examples of the nitrogen/phosphorus-based flame retardant include melamine phosphate compounds such as melamine polyphosphate, melamine orthophosphate, and melamine pyrophosphate; piperazine phosphate compounds such as piperazine orthophosphate, piperazine pyrophosphate, and piperazine polyphosphate; phosphonitrile compounds such as phenyl phosphonitrilic acid ester and (poly)phenoxyphosphazene; phosphoric acid ester amide; phosphoric acid amide; ammonium phosphates such as monoammonium phosphate, diammonium phosphate, triammonium phosphate, and ammonium polyphosphate; and the like. Among these, preferred are melamine polyphosphate, melamine polyphosphate, and phenyl phosphonitrilic acid ester because the effects of the present invention become more prominent.

The nitrogen-based flame retardant is a flame retardant which does not have a phosphorus atom but has a nitrogen atom. Examples of the nitrogen-based flame retardant include guanidine compounds, melamine compounds, triazine compounds, and the like. Among these, preferred are melamine compounds, more preferred is melamine cyanurate because the effects of the present invention become more prominent.

The content of the at least one flame retardant selected from the phosphorus-based flame retardants, the phosphorus and nitrogen-based flame retardants, and the nitrogen-based flame retardants (when two or more of these retardants are contained, the total content of the retardants) in the the polymerizable composition according to the present invention is not particularly limited, but is preferably 8 to 35% by mass, more preferably 10 to 30% by mass, still more preferably 10 to 20% by mass. On the other hand, the content of the flame retardant is preferably 20 to 100 parts by mass, more preferably 30 to 90 parts by mass, still more preferably 40 to 80 parts by mass relative to 100 parts by mass of the total amount of the cycloolefin monomer used in the composition. When the content is within the above ranges, a molded body having high strength and more excellent flame resistant properties can be obtained.

The polymerizable composition according to the present invention may comprise only one flame retardant selected from the phosphorus-based flame retardants, the phosphorus and nitrogen-based flame retardants, and the nitrogen-based flame retardants, or may contain two or more flame retardants selected from these flame retardants.

For example, the polymerizable composition according to the present invention may comprise a phosphorus-based flame retardant and a nitrogen-based flame retardant. In this case, the ratio between the content of the phosphorus-based flame retardant and the content of the nitrogen-based flame retardant in the polymerizable composition according to the present invention is not particularly limited, but is preferably 99:1 to 10:90, more preferably 95:5 to 40:60, still more preferably 90:10 to 70:30 as a mass ratio represented by [content of phosphorus-based flame retardant:content of nitrogen-based flame retardant].

### [Inorganic filler]

The polymerizable composition according to the present invention comprises an inorganic filler. The inorganic filler is preferably scale-like particles or spherical particles. That is, the polymerizable composition according to the present invention preferably comprises a scale-like inorganic filler or a spherical inorganic filler.

When the thickness of the scale-like particles is denoted by t, and the average diameter (D50) determined by laser diffraction particle size analysis is denoted by L, the scale-like particle has a ratio L/t of the average diameter (D50) L to the thickness t of preferably 5 or more, more preferably 10 or more. Furthermore, the scale-like inorganic filler has a thickness t of preferably 0.5 to 10 µm, more preferably 0.8 to 5 µm, still more preferably 1 to 3 µm, and has an average diameter (D50) L of preferably 10 to 300 µm, more preferably 15 to 200 µm, still more preferably 20 to 100 µm. When extremely excellent flame resistant properties or excellent gas barrier properties are required, use of a scale-like inorganic filler is preferred.

When the longest diameter of the spherical particle is denoted by Dₘₐₓ and the smallest diameter is denoted by Dₘᵢₙ, the ratio Dₘₐₓ/Dₘᵢₙ (aspect ratio) is preferably 1 to 2, more preferably 1 to 1.5. On the other hand, the volume average particle size of the spherical inorganic filler is preferably 0.1 to 60 µm, more preferably 1 to 40 µm.

Examples of the component of the inorganic filler include inorganic oxides such as silica, alumina, titanium oxide, zinc oxide, and antimony oxide; metal hydrates such as aluminum hydrates such as alumina monohydrate, magnesium hydrate, calcium hydrate, nickel hydrate, iron hydrate, copper hydrate, zinc borate hydrate, and zinc stannate hydrate; metal nitrides such as silicon nitride and boron nitride; carbonates such as calcium carbonate, magnesium carbonate, and barium carbonate; calcium hydroxide; aluminum hydroxide; magnesium hydroxide; calcium silicate; calcium sulfate; barium titanate; red phosphorus; various metal powders; clay; various forms of ferrite; hydrotalcite; glass; carbon materials such as carbon black, graphite, and fullerene; and the like. The inorganic fillers may be used alone or in combination.

As the component of the inorganic filler, preferred is at least one selected from inorganic oxides, metal hydrates, metal nitrides, and glass, more preferred is at least one selected from silica, alumina monohydrate, and glass, and still more preferred is at least one selected from silica and glass because the ring opening polymerization reaction is not inhibited and a molded body having further improved flame resistant properties can be obtained.

As the inorganic filler, preferred is at least one selected from spherical inorganic oxide particles, scale-like metal hydrate particles, scale-like metal nitride particles, and scale-like glass particles (glass flakes), more preferred is at least one selected from spherical silica particles, scale-like alumina monohydrate particles, and scale-like glass particles, and still more preferred is at least one selected from spherical silica particles and scale-like glass particles.

The inorganic filler may have a hydrophobized surface. When the hydrophobized inorganic filler is used, aggregation and sedimentation of the inorganic filler in the polymerizable composition can be inhibited, and the inorganic filler can be uniformly dispersed in the resulting molded body. Examples of a treatment agent used in the hydrophobization treatment include silane coupling agents such as vinyltrimethoxysilane, titanate coupling agents, aluminate coupling agents, fatty acids such as stearic acid, oils and fats, surfactants, waxes, and the like. The inorganic filler can also be hydrophobized by admixing the treatment agent together with the inorganic filler during preparation of the polymerizable composition.

The content of the inorganic filler in the polymerizable composition according to the present invention is not particularly limited, but is preferably 15 to 85% by mass, more preferably 50 to 80% by mass, still more preferably 60 to 70% by mass. When the content is within the above ranges, a molded body having high strength and more excellent flame resistant properties can be obtained.

When the scale-like inorganic filler is used as the inorganic filler, the content of the scale-like particles in the polymerizable composition according to the present invention is not particularly limited, but is preferably 10 to 150 parts by mass, more preferably 20 to 100 parts by mass, still more preferably 30 to 60 parts by mass relative to 100 parts by mass of the total amount of the cycloolefin monomer used in the composition. When the scale-like inorganic filler is used as the inorganic filler, even though the content of the scale-like particles is relatively small, a molded body having high strength and more excellent flame resistant properties and also having excellent gas barrier properties can be obtained.

When the spherical inorganic filler is used as the inorganic filler, the content of the spherical inorganic filler in the polymerizable composition according to the present invention is not particularly limited, but is preferably 50 to 1000 parts by mass, more preferably 120 to 700 parts by mass, still more preferably 200 to 500 parts by mass relative to 100 parts by mass of the total amount of the cycloolefin monomer used in the composition. When the scale-like particles are used as the inorganic filler, even though the content of the scale-like particles is relatively small, a molded body having high strength and more excellent flame resistant properties and also having excellent gas barrier properties can be obtained.

The ratio of the content (total content) of the at least one flame retardant selected from the phosphorus-based flame retardants, the phosphorus and nitrogen-based flame retardants, and the nitrogen-based flame retardants to the content of the inorganic filler is not particularly limited, but is preferably 90:10 to 2:98, more preferably 75:25 to 3:97, still more preferably 60:40 to 5:95, particularly preferably 30:70 to 10:90 as a mass ratio represented by [content of flame retardant:content of inorganic filler].

The polymerizable composition may comprise a coupling agent, a radical generator, a diisocyanate compound, a polyfunctional (meth)acrylate compound, or other optional components, as necessary.

Examples of the coupling agent include, but are not particularly limited to, silane coupling agents having at least one hydrocarbon group having a norbornene structure (norbornene skeleton). Specific examples of such silane coupling agents include bicycloheptenyltrimethoxysilane, bicycloheptenyltriethoxysilane, bicycloheptenylethyltrimethoxysilane, bicycloheptenylethyltriethoxysilane, bicycloheptenylhexyltrimethoxysilane, bicycloheptenylhexyltriethoxysilane, and the like. Preferred are bicycloheptenylethyltrimethoxysilane, bicycloheptenylethyltriethoxysilane, bicycloheptenylhexyltrimethoxysilane, and bicycloheptenylhexyltriethoxysilane, more preferred are bicycloheptenylethyltrimethoxysilane and bicycloheptenylethyltriethoxysilane, and still more preferred is bicycloheptenylethyltrimethoxysilane.

The polymerizable composition may also contain a silane coupling agent without a hydrocarbon group having a norbornene structure, and coupling agents other than the silane coupling agents, such as thiol coupling agents, aluminate coupling agents, titanate coupling agents, and fatty acid esters.

The content of the coupling agent in the polymerizable composition according to the present invention is not particularly limited, but is preferably 0.1 to 5% by mass, more preferably 0.5 to 1% by mass. On the other hand, the content of the coupling agent in the polymerizable composition according to the present invention is preferably 0.2 to 10 parts by mass, more preferably 0.5 to 5 parts by mass, still more preferably 1 to 3 parts by mass relative to 100 parts by mass of the total amount of the cycloolefin monomer used in the composition.

The radical generator has an effect of generating radicals by heating, thereby inducing a cross-linking reaction in a cycloolefin resin formed by polymerization of the polymerizable composition. The sites at which the radical generator induces the cross-linking reaction are mainly carbon-carbon double bonds contained in the cycloolefin resin. However, the radical generator may cause cross-linking at saturated bond portions.

Examples of the radical generator include organic peroxides, diazo compounds, and nonpolar radical generators. Examples of the organic peroxides include hydroperoxides such as t-butyl hydroperoxide, p-menthane hydroperoxide, and cumene hydroperoxide; dialkyl peroxides such as di-t-butyl peroxide, dicumyl peroxide, and t-butyl cumyl peroxide; diacyl peroxides such as dipropionyl peroxide and benzoyl peroxide; peroxyketals such as 2,5-dimethyl-2,5-di(t-butylperoxy)hexane, 2,5-dimethyl-2,5-di(t-butylperoxy)-3-hexyne, and 1,3-di(t-butylperoxyisopropyl)benzene; peroxyesters such as t-butyl peroxyacetate and t-butyl peroxybenzoate; peroxycarbonates such as t-butylperoxy isopropyl carbonate and di(isopropylperoxy) dicarbonate; alkylsilyl peroxides such as t-butyltrimethylsilyl peroxide; and the like. Among these, preferred are dialkyl peroxides because they cause particularly small inhibition on the metathesis polymerization reaction in bulk polymerization.

Examples of the diazo compounds include 4,4'-bisazidobenzal(4-methyl)cyclohexanone, 4,4'-diazidochalcone, 2,6-bis(4'-azidobenzal)cyclohexanone, 2,6-bis(4'-azidobenzal)-4-methylcyclohexanone, 4,4'-diazidodiphenyl sulfone, 4,4'-diazidodiphenylmethane, 2,2'-diazidostilbene, and the like.

Examples of the nonpolar radical generators include 2,3-dimethyl-2,3-diphenylbutane, 2,3-diphenylbutane, 1,4-diphenylbutane, 3,4-dimethyl-3,4-diphenylhexane, 1,1,2,2-tetraphenylethane, 2,2,3,3-tetraphenylbutane, 3,3,4,4-tetraphenylhexane, 1,1,2-triphenylpropane, 1,1,2-triphenylethane, triphenylmethane, 1,1,1-triphenylethane, 1,1,1-triphenylpropane, 1,1,1-triphenylbutane, 1,1,1-triphenylpentane, 1,1,1-triphenyl-2-propene, 1,1,1-triphenyl-4-pentene, 1,1,1-triphenyl-2-phenylethylene, and the like.

The amount of the radical generator in the polymerizable composition is usually 0.1 to 10 parts by mass, preferably 0.5 to 5 parts by mass relative to 100 parts by mass of the total amount of the cycloolefin monomer used in the composition.

Examples of the diisocyanate compounds include aromatic diisocyanate compounds such as methylenediphenyl 4,4'-diisocyanate (MDI), toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 1,4-phenylene diisocyanate, tolylene diisocyanate, xylylene diisocyanate (XDI), 1,5-naphthalene diisocyanate, benzidine diisocyanate, o-nitrobenzidine diisocyanate, and dibenzyl 4,4'-diisocyanate; aliphatic diisocyanate compounds such as methylene diisocyanate, 1,4-tetramethylene diisocyanate, 1,6-hexamethylene diisocyanate, and 1,10-decamethylene diisocyanate; alicyclic diisocyanate compounds such as 4-cyclohexylene diisocyanate, 4,4'-methylene bis(cyclohexyl isocyanate), 1,5-tetrahydronaphthalene diisocyanate, isophorone diisocyanate, hydrogenated MDI, and hydrogenated XDI; polyurethane prepolymers terminated with isocyanate, which are prepared by reacting these diisocyanate compounds with a low molecular weight polyol or polyamine; and the like. In addition, known isocyanurate forms, biuret forms, adduct forms, or polymeric forms of these compounds, which have a polyfunctional isocyanate group and are conventionally used, can be used without limitation. Examples thereof include dimers of 2,4-toluylene diisocyanate, triphenylmethane triisocyanate, tris-(p-isocyanate phenyl) thiophosphite, polyfunctional aromatic isocyanate compounds, polyfunctional aromatic aliphatic isocyanate compounds, polyfunctional aliphatic isocyanate compounds, fatty acid-modified polyfunctional aliphatic isocyanate compounds, block-type polyfunctional isocyanate compounds such as blocked polyfunctional aliphatic isocyanate compounds, polyisocyanate prepolymers, and the like. Among these, suitably used are aromatic diisocyanate compounds, aliphatic diisocyanate compounds, and alicyclic diisocyanate compounds, which are non-block-type polyfunctional isocyanate compounds, because of their availability and ease in handling. These compounds can be used alone or in combination.

The block-type polyfunctional isocyanate compound indicates an isocyanate compound having at least two isocyanate groups in the molecule which are inactivated at normal temperature through a reaction with an active hydrogen-containing compound. The isocyanate compound usually has a structure having isocyanate groups masked with a blocking agent, examples of the blocking agent including alcohols, phenols, ε-caprolactam, oximes, and active methylene compounds, and the like. The block-type polyfunctional isocyanate compound is usually not reactive at normal temperature, leading to high storage stability, while it exhibits high reactivity due to the isocyanate groups regenerated when heated usually at 140 to 200°C.

These diisocyanate compounds may be used alone or in combination. The compounding amount of the diisocyanate compound in the polymerizable composition is preferably 0.5 to 20 parts by mass, more preferably 1 to 15 parts by mass, still more preferably 2 to 10 parts by mass relative to 100 parts by mass of the total amount of the cycloolefin monomer.

It is inferred that when a polyfunctional (meth)acrylate compound is used together with the diisocyanate compound, the effect of the diisocyanate compound as an adhesive property improving agent or an adhesive property imparting agent is synergistically increased. Preferred examples of the polyfunctional (meth)acrylate compound include ethylene glycol dimethacrylate, triethylene glycol dimethacrylate, trimethylolpropane trimethacrylate, and neopentyl glycol dimethacrylate.

These polyfunctional (meth)acrylate compounds may be used alone or in combination. The compounding amount of the polyfunctional (meth)acrylate compound in the polymerizable composition is preferably 0.5 to 20 parts by mass, more preferably 1 to 15 parts by mass, still more preferably 2 to 10 parts by mass relative to 100 parts by mass of the total amount of the cycloolefin monomer used in the composition.

Examples of the above-mentioned other optional components include activating agents, activity regulators, elastomers, antioxidants, ultraviolet absorbing agents, photostabilizers, and the like.

The activating agent is a compound which acts as a cocatalyst for the above-mentioned metathesis polymerization catalyst to improve the polymerization activity of the catalyst. Examples of activating agents to be used include alkylaluminum halides such as ethylaluminum dichloride and diethylaluminum chloride; alkoxyalkylaluminum halides prepared by substituting part of alkyl groups in these alkylaluminum halides with alkoxy groups; organic tin compounds; and the like. The activating agent can be used in any amount, and the amount is preferably 0.1 to 100 mol, more preferably 1 to 10 mol relative to 1 mol of the total metathesis polymerization catalysts used in the polymerizable composition.

As described later, when two or more reaction stock solutions are mixed to prepare a polymerizable composition, the polymerization composition is injected into a mold, and polymerization is initiated, the activity regulator is used to prevent the polymerization from starting during the injection.

When a compound of a transition metal in Group 5 or 6 in the Periodic Table is used as the metathesis polymerization catalyst, examples of activity regulators include compounds having action to reduce the metathesis polymerization catalyst. Alcohols, haloalcohols, esters, ethers, nitriles, and the like can be used. Among these, preferred are alcohols and haloalcohols, and more preferred are haloalcohols.

Specific examples of alcohols include n-propanol, n-butanol, n-hexanol, 2-butanol, isobutyl alcohol, isopropyl alcohol, t-butyl alcohol, and the like. Specific examples of haloalcohols include 1,3-dichloro-2-propanol, 2-chloroethanol, 1-chlorobutanol, and the like.

In particular, when a ruthenium carbene complex is used as the metathesis polymerization catalyst, examples of the activity regulator include Lewis base compounds. Examples of Lewis base compounds include Lewis base compounds containing a phosphorus atom, such as tricyclopentylphosphine, tricyclohexylphosphine, triphenylphosphine, triphenyl phosphite, and n-butylphosphine; Lewis base compounds containing a nitrogen atom, such as n-butylamine, pyridine, 4-vinylpyridine, acetonitrile, ethylenediamine, N-benzylidenemethylamine, pyrazine, piperidine, and imidazole; and the like. In addition, norbornenes substituted by an alkenyl group, such as vinyl norbornene, propenyl norbornene, and isopropenyl norbornene, are the cycloolefin monomers, and also act as the activity regulator. The amount of these activity regulators to be used may be appropriately adjusted depending on the compound to be used.

Examples of the elastomers include natural rubber, polybutadiene, polyisoprene, styrene-butadiene copolymers (SBR), styrene-butadiene-styrene copolymers (SBS), styrene-isoprene-styrene copolymers (SIS), ethylene-propylene-diene terpolymers (EPDM), ethylene-vinyl acetate copolymers (EVA), hydrides thereof, and the like. The viscosity of the polymerizable composition can be adjusted by dissolving the elastomer in the polymerizable composition. Furthermore, the impact resistance of the resulting composite material molded body can be improved by adding the elastomer. The amount of the elastomer to be used is preferably 0.5 to 20 parts by mass, more preferably 2 to 10 parts by mass relative to 100 parts by mass of the total amount of the cycloolefin monomer in the polymerizable composition.

Examples of antioxidants include a variety of antioxidants for plastics and rubber, such as phenol antioxidants, phosphorus antioxidants, amine antioxidants, and the like.

The polymerizable composition according to the present invention is prepared by appropriately mixing the above-described components according to a known method. The polymerizable composition according to the present invention may be prepared by mixing two or more reaction stock solutions with a mixing apparatus or the like. For the reaction stock solutions, the above-descried components are distributed and prepared into two or more solutions such that each of them alone is not capable of bulk polymerization, and when all the solutions are mixed, they form a polymerizable composition comprising the above-described components in predetermined proportions (where the total content of the components is 100% by mass). Examples of a combination of such two or more reaction stock solutions include the following two combinations (a) and (b) depending on the type of the metathesis polymerization catalyst used.
(a): The metathesis polymerization catalyst to be used can be a metathesis polymerization catalyst which alone has no polymerization reaction activity while exhibiting polymerization reaction activity when used in combination with an activating agent. In this case, the polymerizable composition can be obtained by using and mixing a reaction stock solution (solution A) containing the cycloolefin monomer and the activating agent and a reaction stock solution (solution B) containing the cycloolefin monomer and the metathesis polymerization catalyst. In addition, a reaction stock solution (solution C) containing the cycloolefin monomer but not containing any of the metathesis polymerization catalyst and the activating agent may be used together.
(b): On the other hand, when the metathesis polymerization catalyst to be used is a metathesis polymerization catalyst which alone has polymerization reaction activity, a polymerizable composition can be obtained by mixing a reaction stock solution (solution i) containing the cycloolefin monomer and a reaction stock solution (solution ii) containing the metathesis polymerization catalyst. In this case, the reaction stock solution (ii) to be used is generally a solution or dispersion of the metathesis polymerization catalyst dissolved or dispersed in a small amount of an inert solvent. Examples of such a solvent include aromatic hydrocarbons such as toluene, xylene, ethylbenzene, and trimethylbenzene; ketones such as methyl ethyl ketone, cyclopentanone, cyclohexanone, 2-heptanone, and 4-hydroxy-4-methyl-2-pentanone; cyclic ethers such as tetrahydrofuran; diethyl ether; dichloromethane; dimethyl sulfoxide; ethyl acetate; and the like. Preferred are aromatic hydrocarbons, and more preferred is toluene.

The optional components such as the coupling agents, the radical generators, the diisocyanate compounds, and the polyfunctional (meth)acrylate compounds may be contained in any one of the reaction stock solutions, or may be added in the form of a mixed solution other than the reaction stock solutions.

Examples of the mixing apparatus used in mixing of the reaction stock solutions above include collision mixing apparatuses usually used in reaction injection molding, low pressure mixers such as dynamic mixers and static mixers, and the like.

### <Molded body>

The molded body according to the present invention can be obtained by curing the polymerizable composition according to the present invention. The molded body according to the present invention is a product which can be obtained by completely or partially curing the polymerizable composition according to the present invention. The method for curing the polymerizable composition is not particularly limited, and can be selected according to the composition of the monomer contained in the polymerizable composition or the type of the metathesis polymerization catalyst. Examples thereof include a method of allowing the polymerizable composition to stand at room temperature, a method of heating the polymerizable composition to a predetermined temperature, and the like.

The polymerizable composition according to the present invention and the molded body according to the present invention have excellent flame resistant properties, and also have features such as high heat resistance, low water-absorbing properties, and low dielectric constant. Thus, they are suitably used as various members that require the foregoing features, and particularly suitably used as sealing materials for protection of parts in electrical and electronic applications.

### EXAMPLES

Hereinafter, the present invention will be described by way of Examples, but these Examples should not be construed as limitations. To be noted, "parts" and "%" are mass-based unless otherwise specified.

### <Test (1) of flame resistant properties>

Five specimens having a length of 125 mm and a width of 13 mm were cut from a molded body. Using the resulting specimens, a vertical burn test was performed according to UL 94, the Standard for Safety of Flammability. Specifically, each of the specimens was held vertically using clamps. The specimen was burned with a 20-mm flame for 10 seconds. This procedure was repeated twice, and the burning behavior was observed. The test result was decided according to the test standard mentioned above. According to the test standard, when the resulting test result was classified as "V-0", the test result was denoted as "V-0" in Table 1. When the resulting test result was not classified as "V-0", the test result was denoted as "X" in Table 1. When the resulting test result was classified as "V-0", the molded body can be determined to have excellent flame resistant properties. It is to be noted that even though the test result obtained according to the following test (2) of flame resistant properties was not classified as "5V-A", when the test result obtained according to the test (1) flame resistant properties was classified as "V-0", the molded body can be determined to have excellent flame resistant properties.

### <Test (2) of flame resistant properties>

Three plaque specimens having a length of 150 mm and a width of 150 mm were cut from a molded body. Using the resulting specimens, a burn test was performed according to UL 94-5V (plaque) of the Standard for Safely of Flammability. Specifically, the plaque specimen was held horizontally, and the specimen was burned from the bottom with a 125-mm flame for 5 seconds. This procedure was repeated five times, and the burning behavior was observed. The test result was decided according to the test standard mentioned above. According to the test standard, when the resulting test result was classified as "5V-A", the test result was denoted as "5V-A" in Table 1. When the resulting test result was not classified as "5V-A", the test result was denoted as "X" in Table 1. When the resulting test result was classified as "5V-A", the molded body can be determined to have extremely excellent flame resistant properties.

### <Example 1>

A polymerizable composition comprising a monomer solution (adjusted to 20°C) comprising 95.3 parts of an RIM monomer (available from ZEON Corporation), 2.2 parts of dicyclopentadiene monoepoxide (DCPME), 1.7 parts of bicycloheptenylethyltrimethoxysilane, and 0.8 parts of phenoxyethylene glycol methacrylate; 0.04 parts of the compound (7) as a metathesis polymerization catalyst; 50 parts of a phosphorus-based flame retardant (phosphine oxide, trade name "PQ60", available from DKS Co. Ltd.); and 330 parts of a spherical inorganic filler (spherical silica, trade name "MLR1114", available from Tatsumori Ltd., volume average particle size: 10 µm) was prepared. The RIM monomer comprises about 90% by mass of dicyclopentadiene and about 10% by mass of tricyclopentadiene, and the amount of the metathesis polymerization catalyst used was 0.055 mmol relative to 1 mol of the total amount of the cycloolefin monomer.

A mold-releasing treated metal mold made of aluminum 5052 having an inside length of 300 mm, width of 250 mm, and depth of 4 mm was prepared, and the metal mold was covered with a flat plate made of aluminum 5052. Next, the temperature of the mold was adjusted to 25°C. Then, the polymerizable composition was poured into the mold in an amount allowing production of a molded body having a thickness of 1.0 mm. The mold was allowed to stand for 1 hour, then was heated to 120°C, and was allowed to stand for 1 hour. Next, the mold was cooled to ordinary temperature, and then the mold was removed to give a molded body. Using the resulting molded body, the test (1) of flame resistant properties and the test (2) of flame resistant properties were performed according to the methods described above. The results are shown in Table 1.

### <Example 2>

A polymerizable composition was prepared in the same manner as in Example 1 except that 40 parts of a scale-like inorganic filler (glass flakes, trade name "GF001", available from Glassflake Ltd., average diameter (D50) as determined using a laser diffraction particle size analyzer (Malvern Mastersizer 2000): 27 to 32 µm, standard thickness: 1.0 to 1.3 µm) was used instead of the spherical inorganic filler. A molded body was obtained using the resulting polymerizable composition in the same manner as in Example 1, and the tests as performed in Example 1 were performed in the same manner. The results are shown in Table 1.

### <Example 3>

A polymerizable composition was prepared in the same manner as in Example 1 except that 60 parts of the nitrogen-based flame retardant (melamine cyanurate) was used instead of the phosphorus-based flame retardant. A molded body was obtained using the resulting polymerizable composition in the same manner as in Example 1, and the tests as performed in Example 1 were performed in the same manner. The results are shown in Table 1.

### <Example 4>

A polymerizable composition was prepared in the same manner as in Example 1 except that 40 parts of the scale-like inorganic filler was used instead of the spherical inorganic filler and 60 parts of the nitrogen-based flame retardant (melamine cyanurate) was used instead of the phosphorus-based flame retardant. A molded body was obtained using the resulting polymerizable composition in the same manner as in Example 1, and the tests as performed in Example 1 were performed in the same manner. The results are shown in Table 1.

### <Example 5>

A polymerizable composition was prepared in the same manner as in Example 1 except that the nitrogen-based flame retardant was used together with the phosphorus-based flame retardant, the amount of the phosphorus-based flame retardant used was 50 parts and the amount of the nitrogen-based flame retardant used was 17 parts. A molded body was obtained using the resulting polymerizable composition in the same manner as in Example 1, and the tests as performed in Example 1 were performed in the same manner. The results are shown in Table 1.

### <Example 6>

A polymerizable composition was prepared in the same manner as in Example 1 except that 40 parts of the scale-like inorganic filler was used instead of the spherical inorganic filler, the nitrogen-based flame retardant was used together with the phosphorus-based flame retardant, the amount of the phosphorus-based flame retardant used was 50 parts, and the amount of the nitrogen-based flame retardant used was 17 parts. A molded body was obtained using the resulting polymerizable composition in the same manner as in Example 1, and the tests as performed in Example 1 were performed in the same manner. The results are shown in Table 1.

### <Comparative Example 1>

A polymerizable composition was prepared in the same manner as in Example 1 except that the spherical inorganic filler and the phosphorus-based flame retardant were not used. A molded body was obtained using the resulting polymerizable composition in the same manner as in Example 1, and the tests as performed in Example 1 were performed in the same manner. The results are shown in Table 1.

### <Comparative Example 2>

A polymerizable composition was prepared in the same manner as in Example 1 except that the spherical inorganic filler was not used. A molded body was obtained using the resulting polymerizable composition in the same manner as in Example 1, and the tests as performed in Example 1 were performed in the same manner. The results are shown in Table 1.

### <Comparative Example 3>

A polymerizable composition was prepared in the same manner as in Example 1 except that 60 parts of the nitrogen-based flame retardant (melamine cyanurate) was used instead of the phosphorus-based flame retardant and the spherical inorganic filler was not used. A molded body was obtained using the resulting polymerizable composition in the same manner as in Example 1, and the tests as performed in Example 1 were performed in the same manner. The results are shown in Table 1.

### <Comparative Example 4>

A polymerizable composition was prepared in the same manner as in Example 1 except that the phosphorus-based flame retardant was not used. A molded body was obtained using the resulting polymerizable composition in the same manner as in Example 1, and the tests as performed in Example 1 were performed in the same manner. The results are shown in Table 1.

### <Comparative Example 5>

A polymerizable composition was prepared in the same manner as in Example 1 except that 40 parts of the scale-like inorganic filler was used instead of the spherical inorganic filler and the phosphorus-based flame retardant was not used. A molded body was obtained using the resulting polymerizable composition in the same manner as in Example 1, and the tests as performed in Example 1 were performed in the same manner. The results are shown in Table 1.

### [Table 1]

**Table 1**

| | | | Example 1 | Example 2 | Example 3 | Example 4 | Example 5 | Example 6 | Comp. Ex | 1 Comp. Ex | 2 Comp. Ex. | 3 Comp. Ex | 4 Comp. Ex 5 |
|---|---|---|---|---|---|---|---|---|---|---|---|---|---|
| Amount of flame retardant used and amount of inorganic filler used | | | | | | | | | | | | | |
| | Phosphorus-based flame retardant | (Parts) | 50 | 50 | - | - | 50 | 50 | - | 50 | - | - | - |
| | Nitrogen-based flame retardant | (Parts) | - | - | 60 | 60 | 17 | 17 | - | - | 60 | - | - |
| | Spherical inorganic filler | (Parts) | 330 | - | 330 | - | 330 | - | - | - | - | 330 | - |
| | Scale-like inorganic filler | (Parts) | - | 40 | - | 40 | - | 40 | - | - | - | - | 40 |

| Results of evaluations | | | | | | | | | | | | | |
|---|---|---|---|---|---|---|---|---|---|---|---|---|---|
| | Test (1) of flame resistant properties | | V-0 | V-0 | V-0 | V-0 | V-0 | V-0 | X | X | X | X | X |
| | Test (2) of flame resistant properties | | X | 5VA | X | 5VA | X | 5VA | X | X | X | X | X |

As is apparent from Table 1, the polymerizable compositions comprising a cycloolefin monomer, a metathesis polymerization catalyst, at least one flame retardant selected from phosphorus-based flame retardants, phosphorus and nitrogen-based flame retardants, and nitrogen-based flame retardants, and an inorganic filler were able to give a molded body having excellent flame resistant properties (Examples 1 to 6).

Among them, the polymerizable compositions comprising a scale-like inorganic filler as an inorganic filler were able to give a molded body having extremely excellent flame resistant properties (Examples 2, 4, and 6).

On the contrary, the polymerizable compositions not containing one or both of the flame retardant and the inorganic filler were not able to give a molded body having excellent flame resistant properties (Comparative Examples 1 to 5).

## Claims

1. A polymerizable composition comprising a cycloolefin monomer, a metathesis polymerization catalyst, at least one flame retardant selected from the group consisting of a phosphorus-based flame retardant, a phosphorus and nitrogen-based flame retardant, and a nitrogen-based flame retardant, and an inorganic filler.

2. The polymerizable composition according to claim 1, wherein the inorganic filler is scale-like particles or spherical particles.

3. The polymerizable composition according to claim 1 or 2, wherein the component of the inorganic filler is at least one selected from the group consisting of inorganic oxides, metal hydrates, metal nitrides, and glass.

4. The polymerizable composition according to any one of claims 1 to 3, comprising a cycloolefin monomer having no polar group as the cycloolefin monomer.

5. The polymerizable composition according to any one of claims 1 to 4, comprising dicyclopentadienes as the cycloolefin monomer.

6. The polymerizable composition according to any one of claims 1 to 5, further comprising at least one selected from coupling agents, radical generators, diisocyanate compounds, and polyfunctional (meth)acrylate compounds.

7. The polymerizable composition according to any one of claims 1 to 6, comprising a phosphorus-based flame retardant and a nitrogen-based flame retardant as the flame retardants.

8. The polymerizable composition according to any one of claims 1 to 7, wherein the content of the flame retardant is 8 to 35% by mass.

9. The polymerizable composition according to any one of claims 1 to 8, wherein the content of the inorganic filler is 15 to 85% by mass.

10. The polymerizable composition according to any one of claims 1 to 9, further comprising an (meth)acrylate monomer.

11. A molded body formed by curing the polymerizable composition according to any one of claims 1 to 10.
